# EUROPÄISCHE PATENTSCHRIFT

(11) **EP 4 209 155 B1**
(45) Veröffentlichungstag und Bekanntmachung des Hinweises auf die Patenterteilung: **31.07.2024**
(21) Anmeldenummer: 22150873.2
(22) Anmeldetag: 11.01.2022
(51) Int. Cl.: A47J 37/07

(54) **GRILLVORRICHTUNG MIT GASANSCHLUSS**
GRILLING DEVICE WITH GAS CONNECTION
DISPOSITIF GRILL POURVU DE RACCORDEMENT DE GAZ

(43) Veröffentlichungstag der Anmeldung: 12.07.2023
(73) Patentinhaber: WWS Metallformen GmbH, 76770 Hatzenbühl (DE)
(72) Erfinder: RÖPER, Nicky, 67454 Haßloch (DE)
(74) Vertreter: Patentanwälte Dr. Keller, Schwertfeger Partnerschaft mbB

(56) Entgegenhaltungen:
- WO-A1-2009/075848
- CN-A- 108 968 715
- US-A- 4 827 899
- US-A- 5 050 577
- US-A- 6 131 562

## Beschreibung

Die vorliegende Erfindung betrifft eine Grillvorrichtung, insbesondere eine Gasgrillvorrichtung, nach dem Oberbegriff des Anspruchs 1.

Das Zubereiten von Speisen, insbesondere das Grillen im Freien, erfreut sich zunehmender Beliebtheit. Bisher werden vor allem Holzkohlegrills verwendet, um Speisen im Freien zuzubereiten. Ein Holzkohlegrill hat den Vorteil, flexibel und einfach einsetzbar zu sein, so dass mit Hilfe eines Holzkohlegrills die Zubereitung von Speisen auch in freiem Gelände, in dem keine oder kaum Infrastruktur vorhanden ist, möglich ist. Holzkohlegrills haben jedoch den Nachteil, dass mit offenem Feuer gearbeitet wird und aufgrund der Verbrennung von Holzkohle eine starke Geruchs- und Rauchbelästigung besteht. Die Verwendung von Holzkohlegrills ist daher nicht überall erwünscht. In manchen Bereichen wie etwa in engen innerstädtischen Gebieten oder in sehr trockenen, feuergefährdeten Gebieten ist es daher untersagt, Holzkohlegrills zu verwenden.

Insbesondere im innerstädtischen Bereich, in dem Holzkohlegrills aufgrund der Rauchentwicklung nicht erlaubt sind, werden bereits seit längerem Gasgrills eingesetzt. Diese Gasgrills sind jedoch häufig Standgeräte, die an eine große Gasflasche angeschlossen sind oder sogar mit einer Gasleitung einer Hausversorgung verbunden sind. Für den mobilen Einsatz unterwegs, insbesondere im Campingbereich, sind diese Gasgrills ungeeignet, da diese unter anderem aufgrund der sehr schweren Gasflaschen nur sehr schwierig transportierbar sind.

Für den Campingbereich wurden nun Gasgrills entwickelt, die mittels einer kleinen Gasflasche bzw. Gaskartusche versorgt werden. Da diese Gasflaschen bzw. Gaskartuschen vergleichsweise klein und leicht sind, können diese einfach transportiert werden und eignen sich daher sehr gut für den Einsatz im Campingbereich.

Bei den bisher bekannten mobilen Gasgrills, die im Campingbereich eingesetzt werden, werden üblicherweise Gaskartuschen verwendet, bei denen der Brennstoff in flüssiger Form in der Gaskartusche vorliegt. Dies wird dadurch erreicht, dass Brennstoffe wie etwa Flüssiggase in der Gaskartusche unter einem Druck stehen, der höher als der Umgebungsdruck ist. Der in der Gasflasche notwendige Druck zur Verflüssigung des Brennstoffs ist unter anderem abhängig von der Art des gewählten Brennstoffs. Die üblicherweise in Gasgrills eingesetzten Brenn- oder Heizelemente benötigen jedoch einen Brennstoff in gasförmigem Zustand, genauer gesagt ein Luftgasgemisch. Von daher sind die Gaskartuschen mit Flüssiggasen in der Regel nicht vollständig gefüllt, so dass in einer Gaskartusche genügend Raum vorhanden ist, damit sich der flüssige Brennstoff ausdehnen kann und dadurch zumindest teilweise gasförmig wird. In einer Gaskartusche bzw. Gasflasche befindet sich daher in der Regel sowohl flüssiger als auch gasförmiger Brennstoff, wobei der flüssige Brennstoff unten im Behälter ist. Oberhalb des Flüssigkeitsspiegels liegt der Brennstoff in gasförmiger Form vor.

Eine gattungsgemäße Grillvorrichtung wird in US5050577A offenbart.

Da der Brennstoff für den Gasgrill in gasförmiger Form zur Verfügung stehen muss, befindet sich der Brennstoff- bzw. Gasanschluss an der Oberseite des Behälters, so dass der in der Gaskartusche oberhalb des Flüssigkeitsspiegels vorhandene gasförmige Brennstoff einfach entnommen werden kann.

Werden größere Mengen an gasförmigem Brennstoff benötigt als in der Gaskartusche bereits vorhanden ist, verdampft der in der Gaskartusche enthaltene flüssige Brennstoff, so dass wieder gasförmiger Brennsoff zur Verfügung steht.

Bei den beim Grillen verwendeten Brennstoffen wie etwa Flüssiggas handelt es sich um reale Gase. Wenn sich ein reales Gas in einem begrenzten Volumen ausdehnt und dadurch verdampft, kühlt das verdampfte Gas ab, so dass sich dieses wieder verflüssigen kann. Die Temperatur des sich wieder verflüssigenden realen Gases kann hierbei Temperaturen erreichen, die unterhalb von 0°C und somit unterhalb des Gefrierpunkts von Wasser liegen. Dies führt dazu, dass Wasser, insbesondere Kondenswasser in unmittelbarer Nähe des sich verflüssigenden Gases gefriert. Diese Rückverflüssigung des realen Gases aufgrund des Temperaturabfalls beim Verdampfen ist auch während eines Grillvorgangs festzustellen, wenn sehr große Mengen an Flüssiggas entnommen werden bzw. über einen vergleichsweise langen Zeitraum größere Mengen an Flüssiggas entnommen werden. An der Außenseite der Gaskartusche und an dem Gaskartuschenanschluss bildet sich dann eine Eisschicht. Diese Eisschicht kann beispielsweise dazu führen, dass der Gaskartuschenanschluss vereist und keinen Brennstoff mehr durchlässt. Darüber hinaus verdampft bei den geringen Brennstoff- bzw. Umgebungstemperaturen kein oder zu wenig Brennstoff. Die Folge ist, dass der Gasgrill nicht mehr betrieben werden kann. Insbesondere im Winter, wenn die Außentemperatur gering ist, tritt dieses Problem deutlich häufiger auf als im Sommer bei hohen Außentemperaturen.

Um in dem Fall, in dem größere Gasmengen in kurzer Zeit benötigt werden, unfreiwillige Grillpausen zu vermeiden, ist es daher notwendig, eine zweite Gaskartusche bereitzustellen bzw. eine größere Kartusche mit einem größeren Fassungsvermögen zu verwenden. Weder das Mitführen einer zusätzlichen Kartusche noch die Verwendung einer größeren und somit schwereren Kartusche ist jedoch erwünscht.

Das auf den Joule Thompson Effekt zurückzuführende Rückverflüssigen des realen Gases bzw. Einfrieren der Gasflasche führt schließlich auch dazu, dass es schwierig ist, eine Gasflasche restlos zu entleeren.

Es ist Aufgabe der vorliegenden Erfindung, einen Gasgrill bereitzustellen, der jederzeit mit einer an die benötigte Gasmenge angepassten Gaskartusche bzw. Gasflasche betrieben werden kann, ohne dass die Gefahr der Vereisung der verwendeten Gaskartusche besteht. Insbesondere ist es Aufgabe der Erfindung, einen Gasgrill bereitzustellen, der auch im Winter mit einer an die benötigte Brennstoffmenge angepassten Gaskartusche bzw. Gasflasche zuverlässig funktioniert und darüber hinaus stets eine gleichbleibende Leistung liefert.

Erfindungsgemäß wird die Aufgabe gelöst durch eine Grillvorrichtung umfassend ein Grillgehäuse, ein gasbetriebenes Heizelement und ein Anschlusselement, das mit einem Brennstoffbehälter verbindbar ist, wobei das gasbetriebene Heizelement mittels einer Anschlussleitung mit dem Anschlusselement verbunden ist, wobei die Anschlussleitung einen Brennstoffentnahmeabschnitt aufweist, der ausgelegt ist, Brennstoff in flüssiger Form zu führen, sowie einen Expansionsabschnitt, der ausgelegt ist, den Brennstoff in einem gasförmigen Zustand zu führen, wobei der Brennstoffentnahmeabschnitt in Strömungsrichtung des Brennstoffs stromaufwärts mit dem Anschlusselement verbunden ist und stromabwärts in den Expansionsabschnitt mündet.

Die Anschlussleitung sowie der entsprechenden Brennstoffentnahmeabschnitt bzw. Expansionsabschnitt sind vorzugsweise als Rohrleitung beispielsweise aus Metall ausgebildet.

Dadurch, dass der Brennstoff in flüssiger Form aus dem Brennstoffbehälter, insbesondere Gasbehälter, entnommen wird, besteht die Gefahr des Vereisens des Brennstoffbehälters bzw. der mit dem Brennstoffbehälter verbundenen Anschlusselemente wie etwa dem Anschlusselement nicht oder kaum mehr. Der Brennstoff kann somit vollständig bzw. fast vollständig aus dem Behälter entnommen werden. Es bleiben keine nennenswerte Restbestände in dem Brennstoffbehälter.

Um den Brennstoff in flüssiger Form einfach aus dem Brennstoffbehälter entnehmen zu können, ist es von Vorteil, dass ein Brennstoffbehälter mit einem brennstoffgefüllten Innenraum und einem Brennstoffbehälteranschluss vorgesehen ist, wobei der Brennstoffbehälteranschluss mit dem Anschlusselement wechselwirkt und unterhalb des Innenraums positioniert ist. Da der gasförmige Brennstoff nach oben steigt, ist, solange sich flüssiger Brennstoff im Behälter befindet, der Brennstoff im unteren Bereich des Innenraums flüssig und kann so einfach an der Unterseite des Behälters entnommen werden.

Bisher bekannte Brennstoffbehälter, bei denen sich der Brennstoffbehälteranschluss an der Oberseite des Brennstoffbehälters befindet, können beispielsweise kopfüber montiert werden, so dass der Brennstoffbehälteranschluss nach unten weist.

Um die Menge des aus dem Brennstoffbehälter entnommenen Brennstoffes zu regeln, ist es von Vorteil, dass ein Regelventil, insbesondere ein Druckregelventil vorgesehen ist. Beispielsweise ist das Regelventil bereits im oder direkt am Brennstoffbehälteranschluss vorgesehen. Alternativ ist das Regelventil in Strömungsrichtung des Brennstoffs mit Abstand vom Brennstoffbehälteranschluss im Brennstoffentnahmeabschnitt vorgesehen.

Um den flüssigen Brennstoff im Brennstoffentnahmeabschnitt flüssig zu halten, ist es von Vorteil, dass an dem in Strömungsrichtung des Brennstoffs stromabwärts weisenden Ende des Brennstoffentnahmeabschnitts eine erste Düse vorgesehen ist. Diese Düse sorgt dafür, dass die Brennstoffmenge vom Brennstoffentnahmeabschnitt in den Expansionsabschnitt geregelt werden kann. Insbesondere ist die Düse so ausgelegt, dass in dem Brennstoffentnahmeabschnitt kein bzw. nur ein geringer Druckabfall im Vergleich zum Druck in dem Brennstoffbehälter erfolgt und die Ausdehnung des Brennstoffs in dem Brennstoffentnahmeabschnitt somit so gering ist, dass der Brennstoff flüssig bleibt und dadurch keine Vereisung des Brennstoffentnahmeabschnitts erfolgt.

Um den gasförmigen Brennstoff, welcher aus dem Expansionsabschnitt in das Heizelement gelangt, wunschgemäß zu dosieren, ist es von Vorteil, dass in Strömungsrichtung des Brennstoffs stromabwärts hinter dem Expansionsabschnitt eine zweite Düse vorgesehen ist. Mit Hilfe der zweiten Düse kann darüber hinaus der Druckabfall des gasförmigen Brennstoffs im Expansionsabschnitt eingestellt werden.

Hierbei ist es insbesondere bevorzugt, dass an dem in Strömungsrichtung des Brennstoffs stromabwärts weisenden Ende des Brennstoffentnahmeabschnitts eine erste Düse und in Strömungsrichtung des Brennstoffs stromabwärts hinter dem Expansionsabschnitt eine zweite Düse vorgesehen sind, wobei der Durchmesser der ersten Düse kleiner als der Durchmesser der zweiten Düse ist.

Um zu verhindern, dass der gasförmige Brennstoff im Expansionsabschnitt aufgrund seiner Verdampfung zu stark abkühlt, was zu einer Vereisung des entsprechenden Rohrabschnitts führen kann, ist es von Vorteil, dass eine Heizvorrichtung vorgesehen ist, die den Expansionsabschnitt zumindest abschnittsweise von außen erwärmt. Hierbei ist es von besonderem Vorteil, dass die Heizvorrichtung das gasbetriebene Heizelement ist. Beispielsweise kann ein Rohrleitungsabschnitt, der den Expansionsabschnitt bildet, im Bereich einer Heizzone des in der Grillvorrichtung vorhandenen Heizelements liegen.

Um die benötigte Gasmenge bzw. ein benötigtes Luft-Gas-Gemisch wunschgemäß an den Heizelementen bereitzustellen, ist es von Vorteil, dass der Expansionsabschnitt in Strömungsrichtung des Brennstoffs stromabwärts in einen Rohrabschnitt zur Aufbereitung eines Gas-/Luftgemisches mündet. Vorzugsweise weist der Rohrabschnitt zur Aufbereitung eines Gas- /Luftgemisches eine Öffnung für die Zufuhr von Sauerstoff bzw. Luft auf.

Bei einer bevorzugten Weiterbildung ist der Rohrabschnitt zur Aufbereitung eines Gas- /Luftgemisches ein Verteiler, so dass mehr als ein Heizelement mittels einer einzigen Gaskartusche versorgt werden kann.

Vorzugsweise ist an dem Anschlusselement ein Brennstoffbehälter vorgesehen, welcher Flüssiggas, wie etwa Propan, Butan und Isobutan oder eine Mischung aus wenigstens zwei der Brennstoffe Propan, Butan und Isobutan enthält.

Inhalt der vorliegenden Erfindung ist auch ein Verfahren zum Betreiben einer Grillvorrichtung mit einem Grillgehäuse, einem gasbetriebenen Heizelement und einem Anschlusselement, das mit einem Brennstoffbehälter verbunden ist, wobei das gasbetriebene Heizelement mittels einer Anschlussleitung mit dem Anschlusselement verbunden ist, wobei der Brennstoff aus dem Brennstoffbehälter in flüssigem Zustand entnommen wird, der aus dem Brennstoffbehälter entnommene Brennstoff in flüssigem Zustand durch einen Brennstoffentnahmeabschnitt der Anschlussleitung zu einem Expansionsabschnitt der Anschlussleitung geführt wird, wobei der flüssige Brennstoff in dem Expansionsabschnitt gasförmig wird, und der gasförmige Brennstoff dem Heizelement zugeführt wird.

Vorzugsweise wird der Brennstoff in dem Expansionsabschnitt von außen erwärmt, wobei bei einer bevorzugten Weiterbildung die Wärme von dem in der Grillvorrichtung enthaltenen Heizelement stammt.

Um das geeignete Verbrennungsgas zu erzeugen, ist es weiterhin vorgesehen, dass dem Brennstoff in Strömungsrichtung des Brennstoffs hinter dem Expansionsabschnitt jedoch vor dem gasbetriebenen Heizelement Luft, insbesondere Sauerstoff zugeführt wird.

Bevorzugte Ausführungsformen werden anhand der beigefügten Zeichnungen näher erläutert, in denen zeigen:
- Fig. 1: einen Grill in perspektivischer Ansicht;
- Fig. 2: den in Fig. 1 dargestellten Grill mit einem Brennstoffbehälter;
- Fig. 3: den in Fig. 1 dargestellten Grill in teilweise zerlegter Darstellung;
- Fig. 4: einen Teil des in Fig. 1 dargestellten Gasgrills in teilweise zerlegter Darstellung;
- Fig. 5: das Basiselement des in Fig. 2 dargestellten Grills mit Brennstoffbehälter in perspektivischer Ansicht;
- Fig. 6: eine Draufsicht auf das Basiselement;
- Fig. 7: einen Teil des Basiselements des in Fig. 1 dargestellten Grills in perspektivischer Ansicht;
- Fig. 8: das Heizelement in zerlegter Darstellung und
- Fig. 9: eine schematische Darstellung der Gasanschlussleitung zusammen mit einem Brennstoffbehälter und einem Heizelement.

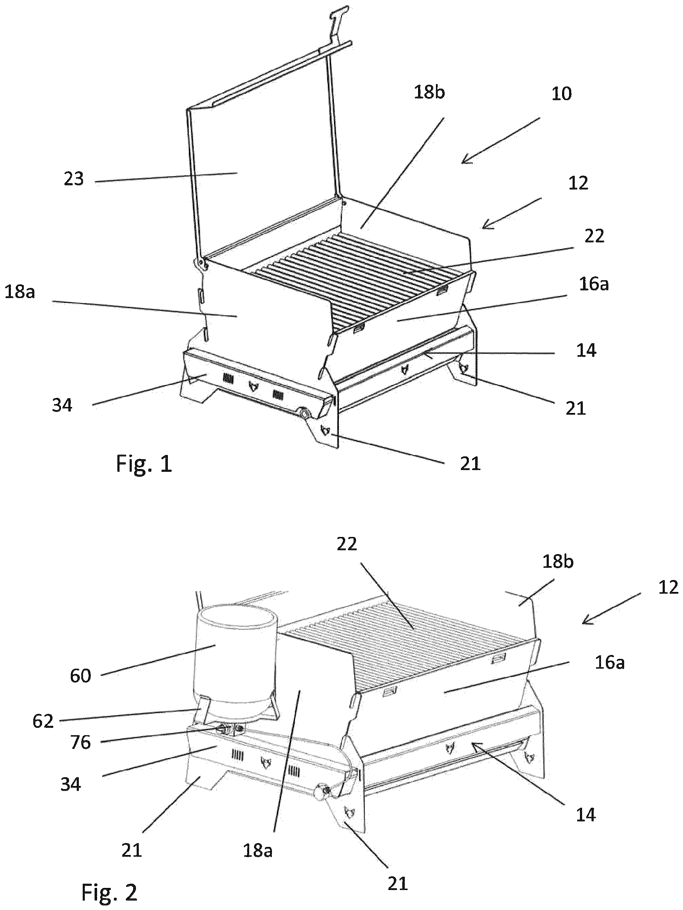

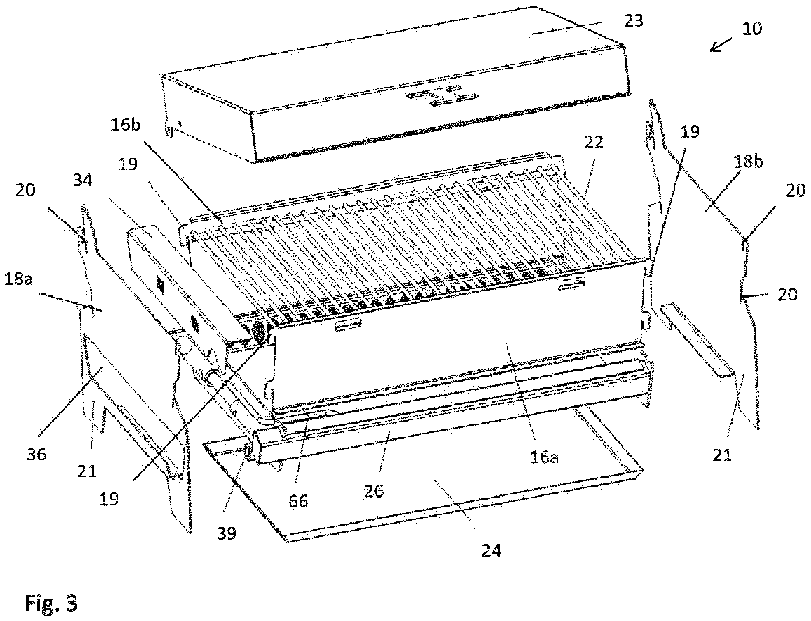

Die Figuren 1 und 3 zeigen eine mit Gas betreibbare Grillvorrichtung 10.

Die Grillvorrichtung 10 umfasst ein Grillgehäuse 12 mit einem Basiselement 14. Weiterhin sind, wie insbesondere in Fig. 3 zu erkennen ist, ein erstes Seitenteil 16a, ein zweites Seitenteil 16b sowie zwei Querteile 18a und 18b vorgesehen. Die beiden Seitenteile 16a, 16b und die beiden Querteile 18a, 18b bilden die Seitenwände des Grillgehäuses 12 und somit einen nach oben und unten offenen Innenraum.

Die Seitenteile 16a und 16b sowie die Querteile 18a, 18b sind im Wesentlichen plattenartig ausgebildet. An den Seitenteile 16a und 16b sowie an den Querteilen 18a und 18b befinden sich Verbindungselemente in Form von Haken 19 und Schlitzen 20, um die Seitenteile 16a, 16b und die Querteile 18a, 18b lösbar miteinander zu verbinden. Wenn die Seitenteile 16a, 16b und die Querteile 18a, 18b bestimmungsgemäß miteinander verbunden sind, weist das Grillgehäuse 12 im Querschnitt eine viereckige, insbesondere rechteckige Grundform auf. Die Seitenteile 16a und 16b bilden hierbei die Längsseite des Grillgehäuses 12, während das Querteil 18a die vordere Stirnseite und das andere Querteil 18b die hintere Stirnseite des Grillgehäuses 12 bilden.

Die Querteile 18a, 18b verfügen jeweils über zwei Verlängerungen 21, die sich nach unten erstrecken, wobei die zwei Verlängerungen 21 jeweils an zwei entgegengesetzt liegenden Seiten des Querteils 18, 18b vorgesehen sind und die Standfüße für die Grillvorrichtung 10 bilden. Während die Querteile 18 senkrecht bzw. vertikal ausgerichtet sind, sind das erste Seitenteil 16a und das zweite Seitenteil 16b geneigt, so dass sich das Grillgehäuse 12 an seinen Längsseiten nach oben erweitert.

Das erste Seitenteil 16a, das zweite Seitenteil 16b und die beiden Querteile 18a, 18b sind aus Metall hergestellt.

An der oben offenen Seite des Grillgehäuses 12 befindet sich eine Grillgutauflage 22. Weiterhin ist ein Deckel 23 vorgesehen, um das Gehäuse 12 an seiner Oberseite zu verschließen. Der Deckel 23 ist hier schwenkbar mit den Gehäuse 12, insbesondere mit den beiden Querteilen 18a, 18b verbunden.

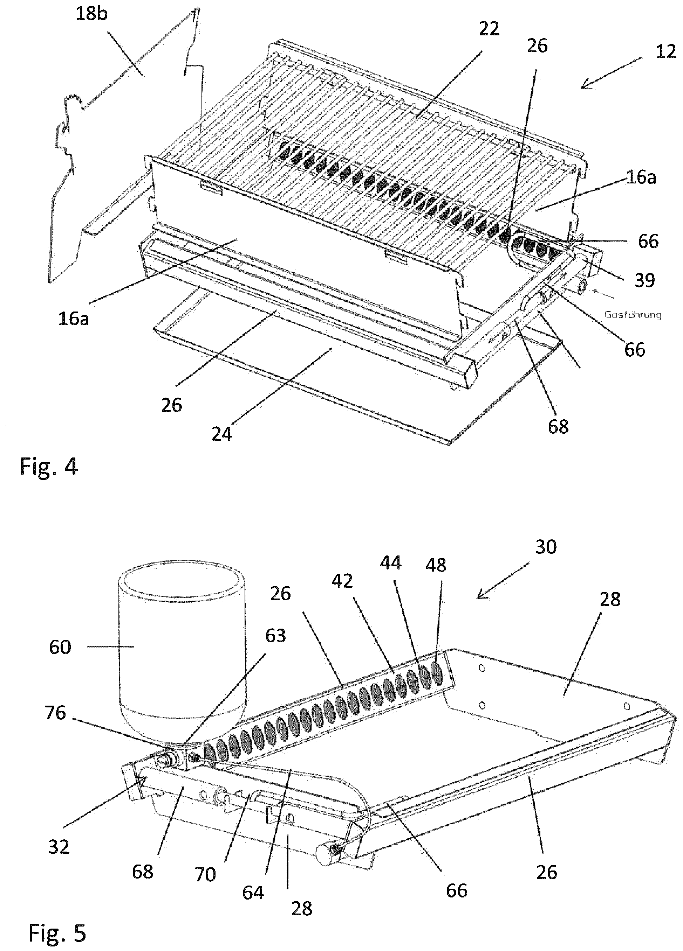

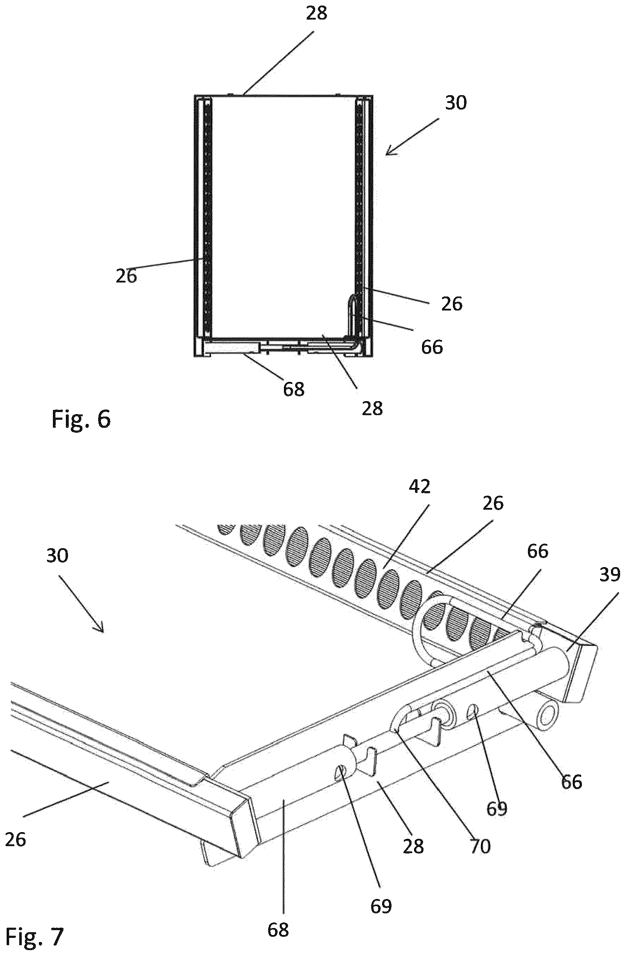

Das Basiselement 14 bildet die Unterseite des Grillgehäuses 12 und umfasst eine Bodenwanne 24 sowie zwei Heizelemente 26 und zwei Querstreben 28. Wie insbesondere in Fig. 5 zu erkennen ist, sind die Heizelemente 26 und die Querstreben fest miteinander verbunden und bilden einen Rahmen 30, bei dem die beiden Heizelemente 26 entgegengesetzt zueinander angeordnet sind (siehe auch Fig. 6). An der Unterseite des Rahmens befindet sich die Bodenwanne 24, die lösbar mit dem Rahmen verbunden ist, insbesondere in diesen eingeschoben ist, um die Bodenwanne 24 beispielsweise nach Gebrauch zu reinigen. Im eingesetzten Zustand bildet die Bodenwanne 24 den Boden des Basiselements 14.

Wenn auch nicht dargestellt, so kann das Basiselement auch einen Rahmen aufweisen, der aus Quer - und Längsstreben gebildet ist, wobei die Heizelemente an den Längs- oder Querstreben befestigt sind.

Der Rahmen 30 ist unterhalb der Seitenteile 16a und 16b angeordnet, wobei sich die beiden Heizelemente 26 jeweils unterhalb der beiden Seitenteile 16a und 16b entlang der Längsseite des Grillgehäuses 12 erstrecken. An der Außenseite des Querstrebens 28, der sich an der vorderen Stirnseite des Gehäuses 12 befindet, ist ein Teil einer Anschlussleitung 32 zur Versorgung des Heizelements 26 mit Brennstoff vorgesehen.

Die an dem Querstreben 28 angeordneten Anschlussleitungen 32 sind im zusammengebauten Zustand der Grillvorrichtung mit einer Abdeckung 34 bedeckt.

In dem Querteil 18a an der vorderen Stirnseite des Gehäuses 12 ist eine Öffnung 36 vorgesehen, durch die die Abdeckung 34 herausragt.

Das Heizelement 26 ist als Heizstab ausgebildet und weist eine Gaszufuhr 39 sowie eine oben offene Brennkammer 40 mit einer Oberseite 42 auf. Die Abgabe der Wärmestrahlung des Heizstabs 26 erfolgt über die Oberseite 42. Der Heizstab 26 ist so um seine Längsachse gedreht, dass die Oberseite 42 nach schräg oben in Richtung des jeweils entgegengesetzt liegenden Seitenteils 16a, 16b weist. Weiterhin ist der Heizstab 26 gegenüber dem jeweiligen Seitenteil 16a, 16b nach außen versetzt, um die Oberseite 42 des Heizstabs 26 im Inneren des Grillgehäuses 12 gegenüber dem jeweiligen Seitenteil 16a, 16b zurückzusetzen. Dadurch wird vermieden, dass Fett, o.ä. auf den Brenner tropfen kann, was dadurch zu unangenehmem Fettbrand führt.

Bei einer nicht dargestellten Ausführungsform einer Grillvorrichtung kann der Heizstab auch so ausgerichtet sein, dass die Oberseite des Heizstabs in Richtung des gegenüberliegenden Seitenteils weist, wodurch die Wärmestrahlung im Wesentlichen horizontal abgegeben wird.

Der Heizstab 26 kann sowohl die Umgebungsluft erwärmen als auch Infrarotstrahlung abgeben.

Die vom Heizstab 26 abgegebene Wärme aufgrund von Wärmestrahlung und Infrarotstrahlung steigt nach oben in Richtung der Grillgutauflage 22. Darüber hinaus wird die Wärmestrahlung und/oderdie Infrarotstrahlung, die von dem Heizstab 26 abgegeben wird, an dem jeweils entgegengesetzt liegenden Seitenteil 16a, 16b reflektiert und in Richtung der Grillgutauflage 22 geführt.

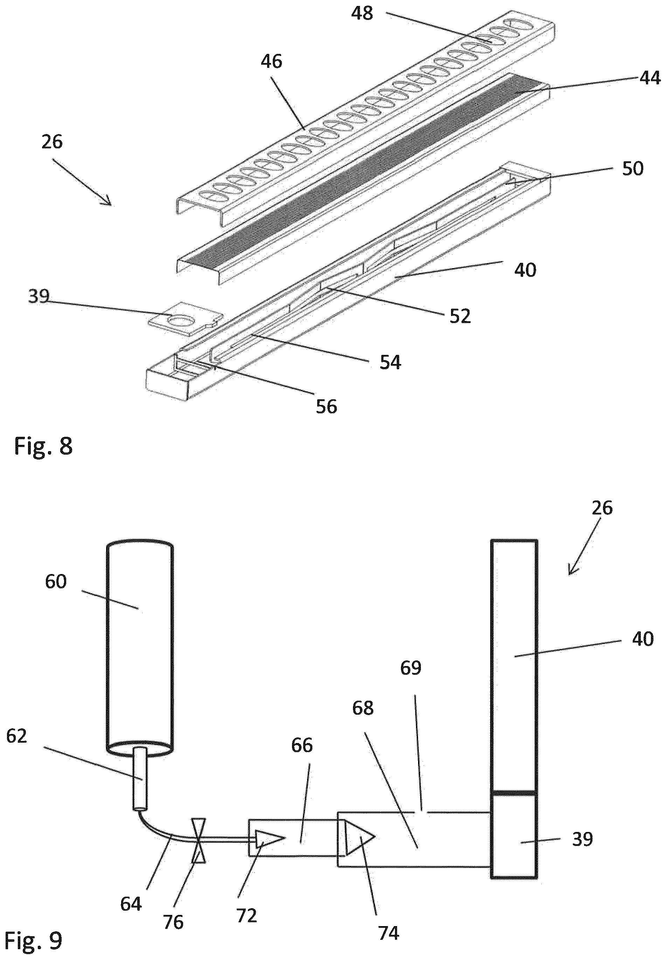

Fig. 8 zeigt eine bevorzugte Ausführungsform eines Heizstabs 26.

Wie in Fig. 8 zu erkennen ist, ist mündet die Gaszufuhr 39 in die offene Seite der Brennkammer. Außerhalb der Gaszufuhr 39 ist die oben offene Brennkammer 40 vollständig von einem mehrlagigen Metallgewebe 44, insbesondere Edelstahlgewebe bedeckt. Auf dem Metallgewebe 44 befindet sich eine Leiste 46 mit einer Vielzahl von Öffnungen 48. Die Leiste 46 bildet die Abdeckung der Brennkammer 40. Im Inneren der Brennkammer 40 ist ein Gasführungsmittel in Form einer Trennwand 50 angeordnet, die sich entlang der Längsachse der Brennkammer 40 erstreckt. Die Trennwand 50 ist im mittleren Abschnitt 52 gegenüber der Längsachse mehrmals geknickt, so dass die Trennwand 50 in einer Ansicht von oben im mittleren Abschnitt einen zickzackförmigen Verlauf hat. In der Trennwand 50 selbst sind mehrere Längsschlitze 54 vorgesehen. Weiterhin ist ein zweites Gasführungsmittel in Art einer Blende 56 vorgesehen, die den Durchmesser der Brennkammer 40 verkleinert. Diese Blende 56 ist optional. Bei einer nicht dargestellten Ausführungsform ist diese Blende weggelassen.

Jedes Heizelement 26 wird mittels der Gaszufuhr 39 mit gasförmigem Brennstoff versorgt. Hierfür ist, wie in Fig. 5 dargestellt, eine Anschlussleitung 32 vorgesehen, die an einem Ende mit einem außerhalb der Grillvorrichtung angeordneten Brennstoffbehälter 60 verbunden ist und am entgegengesetzt liegenden Ende in die Gaszufuhr 39 des Heizelements 26 mündet.

Wie insbesondere in Fig. 5 zu erkennen ist, ist an der Außenseite des Gehäuses 12 eine Brennstoffbehälterhalterung 62 vorgesehen. In der Brennstoffbehälterhalterung 62 ist ein nicht dargestelltes Anschlusselement enthalten. Der Brennstoffbehälter 60 weist einen Innenraum auf, in dem sich Brennstoff befindet, sowie einen Brennstoffbehälteranschluss 63, von dem in Fig. 5 nur ein kleiner Teil zu sehen ist. Der Brennstoffbehälter 60 ist mittels des Brennstoffbehälteranschlusses 63 lösbar in der Brennstoffbehälterhalterung 62 befestigt. Die Brennstoffbehälterhalterung 62 ist so angebracht, dass der Brennstoffbehälter 60 kopfüber gehalten wird und sich der Brennstoffbehälteranschluss 63 somit unterhalb des Innenraums befindet. Bei dieser Anordnung wird sichergestellt, dass der aus dem Brennstoffbehälter 60 entnommene Brennstoff flüssig ist, solange sich flüssiger Brennstoff im Brennstoffbehälter 60 befindet.

Wie ebenfalls in Fig. 5 zu erkennen ist, umfasst die Anschlussleitung 32, die den Brennstoffbehälter 60 mit dem Heizelementen 26 verbindet, drei Abschnitte, nämlich einen Brennstoffentnahmeabschnitt 64, einen Expansionsabschnitt 66 und ein als Verteiler 68 ausgebildeten Rohrabschnitt zur Aufbereitung eines Gas-/Luftgemisches

Die Anschlussleitung ist aus Metallrohren, insbesondere aus Edelstahlrohren unterschiedlicher Durchmesser gebildet.

Von der Brennstoffbehälterhalterung 62 erstreckt sich ein Rohrabschnitt mit einem geringen Durchmesser bis zu einem Rohrabschnitt mit größerem Durchmesser. Der Rohrabschnitt mit dem geringeren Durchmesser bildet den Brennstoffentnahmeabschnitt 64. Der Rohrabschnitt mit dem größeren Durchmesser, der sich an den Brennstoffentnahmeabschnitt 64 anschließt, ist der Expansionsabschnitt 66 der Anschlussleitung 32. Die Schnittstelle zwischen dem Brennstoffentnahmeabschnitt 64 und dem Expansionsabschnitt 66 ist in der Nähe eines Heizelements 26 im Bereich der Stirnseite des Heizelements vorgesehen. Der Expansionsabschnitt 66 der Anschlussleitung 32 wird, wie in Fig. 7 zu erkennen ist, schleifenförmig mit geringem Abstand von dem Heizstab 26 an der Oberseite 42 des Heizstabs 26 entlanggeführt und mündet in den Verteiler 68, der sich entlang einer Querstrebe 28 des Rahmens 30 erstreckt. Das Rohrstück des Verteilers 68 weist wiederum einen größeren Durchmesser auf als das Rohrstück des Expansionsabschnitts 66. In dem Verteiler 68 befinden sich Öffnungen 69, um den im Verteiler 68 befindliche gasförmigen Brennstoff mit Luft zu vermischen. Der Verteiler 68 verfügt über eine Verzweigung 70, um den in den Anschlussleitungen 32 befindlichen gasförmigen Brennstoff zu den beiden Heizstäben 26 zu führen.

Wie besser in Fig. 9 zu erkennen ist, ist zwischen Brennstoffentnahmeabschnitt 64 und Expansionsabschnitt 66 eine erste Düse 72 vorgesehen, um den flüssigen Brennstoff in den Expansionsabschnitt 66 zu führen. In Strömungsrichtung des Brennstoffs ist hinter dem Expansionsabschnitt 66 eine zweite Düse 74 angeordnet, die den Brennstoff in den Verteiler 68 einströmen lässt. Weiterhin ist ein Ventil 76, insbesondere ein Druckregelventil vorgesehen, um den Druck in dem Brennstoffentnahmeabschnitt 64 möglichst konstant zu halten. Das Ventil 76 kann bereits im Brennstoffbehälteranschluss 63 integriert sein oder als separates Bauteil nach dem Gasbelteranschluss 63 im Brennstoffentnahmeabschnitt 64 oder in der Brennstoffbehälterhalterung 62 ausgebildet sein.

Wie oben angegeben, ist der Durchmesser des Rohres im Brennstoffentnahmeabschnitt 64 geringer als der Durchmesser des Rohres im Expansionsabschnitt 66, wobei der Durchmesser des Verteilers 68 wiederum größer als der Durchmesser des Rohres im Expansionsabschnitt 66 ist. Die Wahl des Durchmessers des Rohres im Brennstoffentnahmeabschnitt 64 ist beispielsweise von dem Gasdruck im Brennstoffbehälter 60 abhängig. Das Verhältnis der Durchmesser der Rohre zwischen Expansionsabschnitt 66 und Brennstoffentnahmeabschnitt 64 hängt unter anderem von der an den Heizstäben 26 benötigten Gasmenge und/oder dem Druck in dem Brennstoffbehälter 60 ab.

Der Durchmesser der ersten Düse 72 ist geringer als der Durchmesser der zweiten Düse 74. Hierbei kann das Verhältnis der Durchmesser der ersten Düse 72 zur zweiten Düse 74 beispielsweise zwischen 1: 1,25 bis zu 1: 2 betragen.

Als Brennstoff wird ein Flüssiggas wie etwa Propan, Butan oder Isobutan oder vorzugsweise eine Mischung aus den Gasen Propan, Butan und Isobutan verwendet.

Bei der beschriebenen Anordnung wird der Brennstoff im flüssigen Zustand aus dem Brennstoffbehälter 60 entnommen, gelangt im flüssigen Zustand in den Brennstoffentnahmeabschnitt 64, von dort wird der Brennstoff in den Expansionsabschnitt 66 geführt, in welchem sich der Brennstoff ausdehnen kann und somit gasförmig wird. Der gasförmige Brennstoff wird in dem Verteiler 68 mit Luft gemischt und gelangt anschließend in die Heizstäbe 26.

Um den Druck in dem Brennstoffentnahmeabschnitt 64 konstant und den Brennstoff somit flüssig zu halten, sind sowohl das Druckregelventil 76 aus auch die erste Düse 72 vorhanden.

Im Expansionsabschnitt 66 besteht die Gefahr, dass die für die Verdampfung des Brennstoffs benötigte Energie so groß ist, dass sich der Bennstoff wieder verflüssigt oder Leitungsteile gefrieren. Um eine Rückverflüssigung des Brennstoffs oder ein Einfrieren der Rohrleitung während der Verdampfung des Brennstoffs zu verhindern, wird die für die Ausdehnung des Brennstoffs benötigte Wärme dadurch bereitgestellt, dass der Expansionsabschnitt 66 an dem Heizelement 26 entlanggeführt wird. Im Detail wird die Rohrleitung, die den Expansionsabschnitt 66 bildet, schleifenförmig im Abstand von dem Heizelement 26 geführt.

Bei der dargestellten Ausführungsform wird die im Expansionsabschnitt 66 benötigte Wärme von dem Heizstab 26 bereitgestellt. Bei einer nicht dargestellten Ausführungsform wird die im Expansionsabschnitt 66 zugeführte Wärme von einer externen Wärmequelle geliefert.

Es versteht sich, dass im Rahmen der Erfindung der Verteiler mehr als eine Abzweigung aufweisen kann, um mehr als zwei gasbetriebene Heizelemente mit Gas, d.h. mit gasförmigem Brennstoff zu versorgen. Alternativ kann anstelle des Verteilers ein einfacher Rohrabschnitt zur Aufbereitung eines Luft-/Gasgemisches vorgesehen sein, um nur ein Heizelement mit gasförmigem Brennstoff zu versorgen.

Anstelle der in der Beschreibung dargestellten Grillvorrichtung 10 kann jede mit Gas betriebene Grillvorrichtung in Zusammenhang mit der dargestellten Gasversorgung, welche einen Brennstoffbehälter und Anschlussleitungen vom Brennstoffbehälter bis zum Heizelement umfasst, verwendet werden.

Bei alternativen Grillvorrichtungen kann beispielsweise nur ein Heizstab oder auch mehrere Heizstäbe vorgesehen sein. Es ist nicht zwingend notwendig, ein Heizelement in länglicher Form wie etwa einen Heizstab zu verwenden. In Zusammenhang mit der Erfindung können auch gasbetriebene Heizelemente eingesetzt werden, die eine andere Geometrie aufweisen, beispielsweise rund ausgebildet sind.

Bei dem dargestellten Heizelement sind mehrere Öffnungen vorgesehen. Bei einer nicht dargestellten alternativen Ausführungsform umfasst das Heizelement nur eine Öffnung.

Die Anordnung der Heizelemente in der Grillvorrichtung sowie der Aufbau des Grillgehäuses sind ebenfalls unabhängig von der Gasversorgung.

Anstelle des beschriebenen Heizelements kann auch ein Keramikstrahler verwendet werden.

Im Rahmen der Erfindung ist es nicht zwingend notwendig, dass das Heizelement Infrarotstrahlung abgibt.

Unabhängig von der Art der gewählten gasbetriebenen Grillvorrichtung liegt der Vorteil der vorliegenden Gasversorgung darin, dass eine vergleichsweise große Gasmenge in kurzer Zeit zur Verfügung gestellt werden kann, so dass mehr als ein Heizelement zuverlässig auch bei tiefen Außentemperaturen mit Brennstoff versorgt werden kann.

## Patentansprüche

1. Grillvorrichtung umfassend ein Grillgehäuse (10), ein gasbetriebenes Heizelement (26) und ein Anschlusselement, das mit einem Brennstoffbehälter (60) verbindbar ist, wobei das gasbetriebene Heizelement (26) mittels einer Anschlussleitung (32) mit dem Anschlusselement verbunden ist, **dadurch gekennzeichnet, dass** die Anschlussleitung (32) einen Brennstoffentnahmeabschnitt (64) aufweist, der ausgelegt ist, Brennstoff in flüssiger Form zu führen, sowie einen Expansionsabschnitt (66), der ausgelegt ist, den Brennstoff in einem gasförmigen Zustand zu führen, wobei der Brennstoffentnahmeabschnitt (64) in Strömungsrichtung des Brennstoffs stromaufwärts mit dem Anschlusselement verbunden ist und stromabwärts in den Expansionsabschnitt (66) mündet.

2. Grillvorrichtung nach Anspruch 1, **dadurch gekennzeichnet, dass** ein Brennstoffbehälter (60) mit einem brennstoffgefüllten Innenraum und einem Brennstoffbehälteranschluss (63) vorgesehen ist, wobei der Brennstoffbehälteranschluss (63) mit dem Anschlusselement wechselwirkt und unterhalb des Innenraums positioniert ist.

3. Grillvorrichtung nach einem der vorhergehenden Ansprüche, **dadurch gekennzeichnet, dass** ein Regelventil (76), insbesondere ein Druckregelventil vorgesehen ist.

4. Grillvorrichtung nach einem der vorhergehenden Ansprüche, **dadurch gekennzeichnet, dass** an dem in Strömungsrichtung des Brennstoffs stromabwärts weisenden Ende des Brennstoffentnahmeabschnitts (64) eine erste Düse (72) und/oder in Strömungsrichtung des Brennstoffs stromabwärts hinter dem Expansionsabschnitt (66) eine zweite Düse (74) vorgesehen sind.

5. Grillvorrichtung nach einem der vorhergehenden Ansprüche, **dadurch gekennzeichnet, dass** an dem in Strömungsrichtung des Brennstoffs stromabwärts weisenden Ende des Brennstoffentnahmeabschnitts (64) eine erste Düse (72) und in Strömungsrichtung des Brennstoffs stromabwärts hinter dem Expansionsabschnitt (66) eine zweite Düse (74) vorgesehen sind, wobei der Durchmesser der ersten Düse (72) kleiner als der Durchmesser der zweiten Düse (74) ist.

6. Grillvorrichtung nach einem der vorhergehenden Ansprüche, **dadurch gekennzeichnet, dass** eine Heizvorrichtung vorgesehen ist, die den Expansionsabschnitt (66) zumindest abschnittsweise von außen erwärmt.

7. Grillvorrichtung nach Anspruch 6, **dadurch gekennzeichnet, dass** die Heizvorrichtung das gasbetriebene Heizelement (26) ist.

8. Grillvorrichtung nach einem der vorhergehenden Ansprüche, **dadurch gekennzeichnet, dass** der Expansionsabschnitt (66) in Strömungsrichtung des Brennstoffs stromabwärts in einen Rohrabschnitt zur Aufbereitung eines Luft-/Gasgemisches mündet.

9. Grillvorrichtung nach Anspruch 8, **dadurch gekennzeichnet, dass** der Rohrabschnitt zur Aufbereitung eines Luft-/Gasgemisches ein Verteiler (68) ist.

10. Grillvorrichtung nach einem der vorhergehenden Ansprüche, **dadurch gekennzeichnet, dass** an dem Anschlusselement ein Brennstoffbehälter (60) vorgesehen ist, welcher Flüssiggas, insbesondere Propan, Butan und Isobutan oder eine Mischung aus wenigstens zwei der Brennstoffe Propan, Butan und Isobutan enthält.

11. Verfahren zum Betreiben einer Grillvorrichtung mit einem Grillgehäuse, einem gasbetriebenen Heizelement (26) und einem Anschlusselement, das mit einem Brennstoffbehälter (60) verbunden ist, wobei das gasbetriebene Heizelement (26) mittels einer Anschlussleitung (32) mit dem Anschlusselement verbunden ist, **dadurch gekennzeichnet, dass**
• der Brennstoff aus dem Brennstoffbehälter (60) in flüssigem Zustand entnommen wird,
• der aus dem Brennstoffbehälter (60) entnommene Brennstoff in flüssigem Zustand durch einen Brennstoffentnahmeabschnitt (64) der Anschlussleitung (32) zu einem Expansionsabschnitt (66) der Anschlussleitung (32) geführt wird, wobei der flüssige Brennstoff in dem Expansionsabschnitt (66) gasförmig wird, und
• der gasförmige Brennstoff dem Heizelement (26) zugeführt wird.

12. Verfahren nach Anspruch 11, **dadurch gekennzeichnet, dass** der Brennstoff in dem Expansionsabschnitt (66) von außen erwärmt wird.

13. Verfahren nach Anspruch 11 oder 12, **dadurch gekennzeichnet, dass** der Brennstoff in Strömungsrichtung des Brennstoffs hinter dem Expansionsabschnitt (66), jedoch vor dem gasbetriebenen Heizelement (26) Luft, insbesondere Sauerstoff zugeführt wird.

## Claims

1. A barbecue device comprising a barbecue housing (10), a gas-powered heating element (26) and a connecting element that can be connected to a fuel container (60), wherein the gas-powered heating element (26) is connected to the connecting element by means of a connecting line (32), **characterized in that** the connecting line (32) has a fuel extraction section (64) that is designed to carry liquid fuel, and an expansion section (66) that is designed to carry gaseous fuel, wherein the fuel extraction section (64) is connected upstream to the connecting element in flow direction of the fuel and leads downstream to the expansion section (66).

2. The barbecue device according to claim 1, **characterized in that** the fuel container (60) with an interior filled with fuel and a fuel container connection (63) are provided, wherein the fuel container connection (63) interacts with the connecting element and is positioned below the interior.

3. The barbecue device according to one of the preceding claims, **characterized in that** a control valve (76), in particular a pressure control valve, is provided.

4. The barbecue device according to one of the preceding claims, **characterized in that** a first nozzle (72) is provided at the end of the fuel extraction section (64) pointing downstream in flow direction of the fuel and/or a second nozzle (74) is provided downstream after the expansion section (66) in flow direction of the fuel.

5. The barbecue device according to one of the preceding claims, **characterized in that** a first nozzle (72) is provided at the end of the fuel extraction section (64) pointing downstream in flow direction of the fuel and a second nozzle (74) is provided downstream after the expansion section (66) in flow direction of the fuel, wherein the diameter of the first nozzle (72) is smaller than the diameter of the second nozzle (74).

6. The barbecue device according to one of the preceding claims, **characterized in that** a heating device is provided that heats the expansion section (66) at least in sections from the outside.

7. The barbecue device according to claim 6, **characterized in that** the heating device is the gas-powered heating element (26).

8. The barbecue device according to one of the preceding claims, **characterized in that** the expansion section (66) leads downstream in flow direction of the fuel to a pipeline section for processing an air/gas mixture.

9. The barbecue device according to claim 8, **characterized in that** the pipeline section for processing an air/gas mixture is a distributor (68).

10. The barbecue device according to one of the preceding claims, **characterized in that** a fuel container (60) is provided on the connecting element, which contains liquid gas, in particular propane, butane or isobutane or a mixture of at least two of the fuels propane, butane and isobutane.

11. A method for operating a barbecue device with a barbecue housing, a gas-powered heating element (26) and a connecting element that is connected to a fuel container (60), wherein the gas-powered heating element (26) is connected to the connecting element by means of a connecting line (32), **characterized in that**
• the fuel is extracted from the fuel container (60) in a liquid state,
• the liquid fuel extracted from the fuel container (60) is guided through a fuel extraction section (64) of the connecting line (32) to an expansion section (66) of the connecting line (32), wherein the liquid fuel becomes gaseous in the expansion section (66), and
• the gaseous fuel is fed into the heating element (26).

12. The method according to claim 11, **characterized in that** the fuel in the expansion section (66) is heated from the outside.

13. The method according to claim 11 or 12, **characterized in that** air, in particular oxygen, is fed to the fuel downstream of the expansion section (66), but upstream of the gas-powered heating element (26), in flow direction of the fuel.

## Revendications

1. Grilloir comprenant un boîtier (10), un élément chauffant (26) fonctionnant au gaz et un élément de raccordement pouvant être relié à un réservoir de combustible (60), ledit élément chauffant (26), fonctionnant au gaz, pouvant être relié audit élément de raccordement au moyen d'un conduit de jonction (32), **caractérisé par le fait que** le conduit de jonction (32) est muni d'un tronçon (64) de prélèvement de combustible, conçu pour acheminer du combustible sous forme liquide, ainsi que d'un tronçon d'expansion (66) conçu pour acheminer ledit combustible dans un état gazeux, sachant que ledit tronçon (64) de prélèvement de combustible est relié à l'élément de raccordement en amont, dans la direction de l'écoulement du combustible, et débouche en aval dans ledit tronçon d'expansion (66).

2. Grilloir selon la revendication 1, **caractérisé par le fait qu'**il est prévu un réservoir de combustible (60) présentant un espace interne empli de combustible et un raccord (63) dudit réservoir de combustible, ledit raccord (63) du réservoir de combustible opérant en interaction avec l'élément de raccordement, et étant placé au-dessous dudit espace interne.

3. Grilloir selon l'une des revendications précédentes, **caractérisé par** la présence d'une vanne de régulation (76), notamment d'une vanne régulatrice de pression.

4. Grilloir selon l'une des revendications précédentes, **caractérisé par le fait qu'**une première buse (72) est prévue à l'extrémité du tronçon (64) de prélèvement de combustible orientée vers l'aval dans la direction de l'écoulement du combustible, et/ou une seconde buse (74) est prévue derrière le tronçon d'expansion (66), en aval dans ladite direction de l'écoulement du combustible.

5. Grilloir selon l'une des revendications précédentes, **caractérisé par le fait qu'**une première buse (72) est prévue à l'extrémité du tronçon (64) de prélèvement de combustible orientée vers l'aval dans la direction de l'écoulement du combustible, et une seconde buse (74) est prévue derrière le tronçon d'expansion (66), en aval dans ladite direction de l'écoulement du combustible, le diamètre de ladite première buse (72) étant inférieur au diamètre de ladite seconde buse (74).

6. Grilloir selon l'une des revendications précédentes, **caractérisé par** la présence d'un dispositif de chauffage qui chauffe le tronçon d'expansion (66) de l'extérieur, au moins par zones.

7. Grilloir selon la revendication 6, **caractérisé par le fait que** le dispositif de chauffage est l'élément chauffant (26) fonctionnant au gaz.

8. Grilloir selon l'une des revendications précédentes, **caractérisé par le fait que** le tronçon d'expansion (66) débouche dans un tronçon tubulaire, en aval dans la direction de l'écoulement du combustible, en vue d'élaborer un mélange air/gaz.

9. Grilloir selon la revendication 8, **caractérisé par le fait que** le tronçon tubulaire affecté à l'élaboration d'un mélange air/gaz est un répartiteur (68).

10. Grilloir selon l'une des revendications précédentes, **caractérisé par le fait qu'**un réservoir de combustible (60) prévu au niveau de l'élément de raccordement renferme du gaz liquéfié, en particulier du propane, du butane et de l'isobutane, ou un mélange d'au moins deux combustibles, au sein des combustibles propane, butane et isobutane.

11. Procédé d'actionnement d'un grilloir comprenant un boîtier, un élément chauffant (26) fonctionnant au gaz, et un élément de raccordement relié à un réservoir de combustible (60), ledit élément chauffant (26), fonctionnant au gaz, étant relié audit élément de raccordement au moyen d'un conduit de jonction (32), **caractérisé par le fait que**
• le combustible est prélevé du réservoir de combustible (60) à l'état liquide,
• ledit combustible prélevé dudit réservoir de combustible (60) est acheminé, à l'état liquide, vers un tronçon d'expansion (66) du conduit de jonction (32) en empruntant un tronçon (64) dudit conduit de jonction (32) dévolu au prélèvement de combustible, ledit combustible liquide prenant alors une forme gazeuse dans ledit tronçon d'expansion (66), et
• le combustible gazeux est délivré à l'élément chauffant (26).

12. Procédé selon la revendication 11, **caractérisé par le fait que** le combustible est chauffé de l'extérieur dans le tronçon d'expansion (66).

13. Procédé selon la revendication 11 ou 12, **caractérisé par le fait que** le combustible est délivré à de l'air, notamment à de l'oxygène, derrière le tronçon d'expansion (66), mais toutefois devant l'élément chauffant (26) fonctionnant au gaz en considérant dans la direction de l'écoulement dudit combustible.
